# EUROPEAN PATENT APPLICATION

(11) **EP 4 723 556 A1**
(43) Date of publication of application: **08.04.2026**
(21) Application number: 25207032.1
(22) Date of filing: 06.10.2025
(51) Int. Cl.: H04L 9/40, H04W 12/06, H04W 12/08, H04W 12/30

(54) **METHOD, CONFIGURATION PROGRAM, APPLICATION PROGRAM DATASET, COMPUTER-READABLE DATA CARRIER AS WELL AS SERVER DEVICE CONFIGURED FOR ACCESSING SECURITY CREDENTIALS**

(30) Priority: 07.10.2024 US 202463704240 P
(71) Applicant: Giesecke+Devrient Mobile Security Germany GmbH, 81677 München (DE)
(72) Inventor: Posch, Michael, 81677 Munich (DE); Borase, Hemant Udhavrao, Dulles, 20166 (US)
(74) Representative: LKGLOBAL Partnerschaftsgesellschaft mbB

(57) **Abstract**

A method, as well as a corresponding configuration program (10), an application program dataset (A), a computer-readable data carrier (11, 12, 13), a user device (5), and a server device (3) are provided, wherein for configuring the user device (5), the method comprises the steps of providing security credentials (H), for example, by a trusted entity (T), adapted to allow a secure element (6), such as an eUICC, of the user device (5), to enable access to a secured service, for example, at least one mobile telecommunication network (N); storing the security credentials (H) in the secure element (6); and providing an application program dataset (A) configured to at least partly access and/or alter information provided in the security credentials (H) via an application programming interface, API, (B).

## Description

### Technical Field

The present disclosure relates to the field of configuring user devices, such as smart cards, transaction cards, personal mobile devices, Internet-of-Things (IoT) devices, or alike, to access certain secured services, for example, for gaining access to mobile telecommunication networks. In particular, the present disclosure relates to a method of configuring a user device to enable a user to access to a secured service, in particular for communication via at least one mobile telecommunication network, a configuration program for configuring a user device to enable a user to access to a secured service, in particular for communication via mobile telecommunication networks, an application program dataset for a secure element of a user device, such as an eUICC, a computer-readable data carrier, a user device, in particular a mobile device or an IoT device to be configured to enable a user to access to a secured service, such as for communication via a mobile telecommunication network, and a server device, in particular a security server providing a secure location, in particular configured for allowing secure remote operation of user devices involving a trusted entity.

### Background of the Invention

User devices, such as personal mobile devices or IoT-devices, as well as smart cards (e.g., so-called java cards), identification cards, transaction cards, etc., are known from the prior art. The user devices are commonly configured to employ electronic subscriber profiles authenticating a user for enabling secure operations which may involve a trusted entity. Such secure operations may take place as accesses to restricted areas and/or information, secure transactions, data accesses, communications via telecommunication networks, e.g., mobile networks, etc.

Therefore, user devices are typically equipped with an electronic/embedded secure element (SE, eSE), also known as tamper resistant element (TRE), which may take the form of an UICC, eUICC, iUICC, SIM, eSIM, iSIM, or alike, configured to store certain security credentials, and/or one or more of the electronic subscriber profiles that may allow the user devices to connect to mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

US 2021 306347 A1, for example, describes methods, devices and systems for performing remote file management, RFM, operations at a secure element, SE. A secure file update script is received at an OfflineRFMAgent, located within the SE, from an off-card entity, OCE. The secure file update script has been generated offline by an SE issuer managing the OCE, using a decentralized remote file management, DRFM, platform, and comprises a plurality of remote management commands for carrying out file management operations on the SE. In a further step, a security level authentication between the OCE and SE based on the secure file update script is performed. If the security level authentication is successful, in a subsequent step a secure channel session between the OCE and the SE is established through the OfflineRFMAgent. Finally, the plurality of remote management commands is processed to remotely manage a file system on the SE.

US 10 484 370 B2 refers to a method for operating a security element of a mobile terminal with a memory unit includes using a first subscription profile with a first operating system for the security element, and a second subscription profile with a second operating system for the security element. The method involves operating the security element with the first operating system to communicate with the first subscription profile via a first mobile communication network; switching from the first operating system to the second operating system of the security element through a boot loader in the memory unit loading and executing the second operating system following a reboot of the security element; and operating the security element with the second operating system, to be able to communicate with the second subscription profile via a second mobile communication network. A corresponding security element and a corresponding mobile terminal are provided.

US 2015 281957 A1 describes a subscriber identity module for authenticating a subscriber on a communication network, which includes: a first set of subscriber identity data for authenticating the subscriber; a second set of subscriber identity data for authenticating the subscriber, with the first set of subscriber identity data differing from the second set of subscriber identity data; and a means for managing the first and second sets of subscriber identity data, with the managing being realized by management functions. The subscriber identity module can be extended to a method for managing the subscriber identity module, to a use of the subscriber identity module in a mobile end device, and to a system comprising subscriber end devices and a remote entity.

EP 2 835 996 B1 relates to a method of performing a switch from a first mobile network to a second mobile network by a mobile terminal comprising a secure element. The method comprises the steps of: (a) requesting attachment to the first mobile network using a first identification data element, preferably a first IMSI, of a first subscription profile; (b) requesting attachment to the second mobile network using a second identification data element, preferably a second IMSI, of a second subscription profile; and (c) requesting attachment to the first mobile network, the second mobile network or another mobile network using a confirmation data element, preferably a confirmation IMSI, wherein the confirmation data element has the same format as the first and the second identification data element and is configured such that the attachment request is forwarded to a subscription management server in order to inform the subscription management whether the attachment to the second mobile network was successful.

EP 2 835 994 B1 relates to a method of performing a switch from a first mobile network to a second mobile network by a mobile terminal comprising a secure element. The method comprises the steps of: (a) attaching to the first mobile network using a first attachment message containing a first identification data element, preferably a first IMSI, of a first subscription profile; and attaching to the second mobile network by an attachment process including a second attachment message containing a second identification data element, preferably a second IMSI, of a second subscription profile, wherein the second mobile network is configured to monitor at least parts of the attachment process, to determine the second identification data element contained therein and to forward this information to a subscription management server in order to confirm the successful attachment of the secure element to the second mobile network.

Methods for configuring user devices, as described above, may not fully satisfy all requirements regarding aspects of a securely providing and accessing security credentials in secure elements.

In particular, the involvement of third parties in handling security credentials can be regarded as not being solved in a fully satisfactory manner. When it comes to accessing information provided in and/or as security credentials, for example, related to a user profile, on the one hand, convenient operation and availability, as well as on the other hand, functional safety, and security may not be fully assured.

### Summary of the Invention

It may be seen as an object to improve the interaction between the user devices and/or their secure elements when dealing with security credentials. In particular, it may be seen as an object to provide a way to handle security credentials of user devices stored in their secure elements involving multiple parties, such that on the one hand, convenient operation and availability, as well as on the other hand, functional safety, and security of the security credentials can be assured or at least improved in a satisfactory manner. These objects are at least partly achieved by the subject-matter of the independent claims.

According to an aspect, a method of configuring a user device to enable a user to access to a secured service, in particular for communication via at least one mobile telecommunication network, is provided, the method comprising the steps of providing security credentials, for example, by a trusted entity, adapted to allow a secure element, such as an eUICC, of the user device, to enable access to a secured service, for example, the at least one mobile telecommunication network; storing the security credentials in the secure element; and providing an application program dataset configured to at least partly access and/or alter information provided in the security credentials via an application programming interface (API).

According to an aspect, a configuration program for configuring a user device to enable a user to access to a secured service, in particular for communication via mobile telecommunication networks, is provided, wherein the configuration program comprises instructions which, when the configuration program is executed by a server device, a user device, and/or a secure element, cause the server device, the user device, and/or the secure element to carry out a corresponding method.

According to an aspect, an application program dataset for operating a secure element of a user device, such as an eUICC, is provided, wherein the application program dataset is configured to carry out a corresponding method according to at least one of claims and/or configured with a corresponding configuration program.

According to an aspect, a computer-readable data carrier is provided, having stored thereon a corresponding configuration program and/or a corresponding application program dataset.

According to an aspect, a user device, in particular a mobile device or an IoT device to be configured to enable a user to access to a secured service, such as for communication via a mobile telecommunication network, is provided, wherein the user device is configured to carry out a corresponding method, comprises a corresponding configuration program, a corresponding application program dataset and/or a corresponding computer-readable data carrier.

According to an aspect, a server device is provided, such as a security server providing a secure location for handling security credentials, in particular user profiles, to enable access to a secured service, such as for communication via mobile telecommunication networks, wherein the server device is configured to carry out a corresponding method, comprises a corresponding configuration program, a corresponding application program dataset and/or a corresponding computer-readable data carrier.

The secure element may be understood as any kind of tamper resistant element, such as an UICC, eUICC, iUICC, SIM, eSIM, iSIM, or alike. The security credentials may comprise at least one profile identifier, security key, authentication certificate, cryptographic parameter, or alike, and can contain subscription data required for accessing at least one mobile telecommunication network. A respective set of security credentials can be provided for accessing the mobile telecommunication network.

An access to certain information provided in the security credentials can be provided. The application program dataset can access and/or alter respective information through the API. Alternatively, or additionally, the API may be configured to access and/or alter a pre-defined secure storage location of the secure element, such as a particular memory region containing, adapted or at least intended to contain a security credential, such as a security key, or alike. The security credentials or at least their respective functionality can thus be made available to the operating system, for example, in order to initiate a registration at a secured service, such as a mobile telecommunication network, based on respective security credentials.

For example, the application program dataset may be selected for at least temporarily carrying out authentication commandos received from the server device. After the security credentials have been then set through API, a reboot of the secure element may be performed. After the reboot, the operating system of the secure element may access and utilize the security credentials.

The application program dataset may at least in part be provided on the secure element and can be configured to interact with the user device and/or at least one network terminal thereof. In other words, the application program dataset may at least partly run on the secure element, for example, in the form of an applet, such as a Java Card applet and/or Ultralight Bootstrap (ULB) applet. The API can be provided in the form of a Java Card API, or alike.

Furthermore, the application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

Additionally, an installation program dataset can be provided for installing and/or managing the application program dataset, such as for installing and/or updating an operating system dataset or respective update data subsets, including the application program dataset. Both, the installation program dataset and the installation program dataset may be integrated as data subsets into a customization dataset, such as a firmware suite allowing for customization of data on the secure element as described herein.

The proposed solution allows for granting access to secure information contained within the security credentials without the need to disclose information regarding respective data structures thereof, such as sharing file IDs, definitions, and/or structures, thereby shielding these data structures from unwanted and/or an authorised access. The application program dataset and/or API can be provided by a single trusted entity which can share the application program dataset and/or API for usage by other parties involved, including third parties (e.g., competitors, suppliers, partners, or alike, in particular when serving a common customer) without sharing its security own credentials, instead allowing third party to attach their security credentials to the shared application program dataset and/or API. This can help to simplify managing only one single source code stream and/or product, thereby facilitating maintenance and at the same time increasing reliability.

Thus, the proposed solution has the advantage over the prior art, that it provides a way to securely handle security credentials for user devices involving their secure elements, such that on the one hand, convenient operation and availability, as well as on the other hand, functional safety, and security of different network attachments can be assured or at least improved in a satisfactory manner. In turn, this allows to enhance and facilitate an integration of secure operations across multiple parties involved, for example, users and providers of secure elements, including secure element manufacturers, such as different eUICC manufacturers (EUM). By eliminating a need to share certain classified information regarding respective data structures, any documentation shared amongst the parties, including third parties, involved can be restricted to a degree that it allows them to share operation of the application program dataset and/or API.

Further developments can be derived from the dependent claims and from the following description. Features described with reference to a user device, secure element, server device and components thereof may be implemented as method steps, or vice versa. Therefore, the description provided in the context of the user device, secure element, server device and their components analogously applies to respective methods. In particular, features and functions of the user device, secure element, server device and their components may be implemented as method steps which in turn may be implemented as respective device features or functions.

According to an embodiment of the method, the application program dataset is configured to call the API. The API may then carry out functions and/or deliver information to the operating system dataset, as called by the application program dataset. This further helps in shielding restricted data structures from unwanted and/or an authorized access, yet, enabling the utilization of information contained therein.

According to an embodiment of the method, the application program dataset and/or the API are configured to be controlled by command messages. The command messages can be exchanged between the application program dataset and the API. This further helps in enhancing and facilitating communication between the application program dataset and the API.

According to an embodiment of the method, the security credentials are embedded in data objects and the API is configured to access the data objects. The data objects and respective data structures can be defined by a single trusted entity. This may further help in shielding restricted data objects and related data structures from unwanted and/or an authorized access, yet, enabling the utilization.

According to an embodiment of the method, the security credentials are at least in part provided in the form of at least one elementary file and/or within a secure memory location within secure element, and the API is configured to create, alter, update, and/or access the elementary file and/or a secure storage location within secure element, in particular used to store security credentials, such as security keys. Such elementary files and/or secure memory locations maybe used according to standardised file structures, such as the ETSI TS 102 221 file structure of UICC application (chapter 8.1, Fig. 8.1) and/or any proprietary EUM file structure. Thereby, the application program dataset can, instead of directly calling the EFs and/or directly accessing storage locations with credentials (NAA keys, Opc, K, Milenage constants), call the API. This further helps in shielding restricted data structures, in particular elementary files and/or secure memory locations, from unwanted and/or an authorized access, yet, enabling the utilization of information contained therein.

According to an embodiment of the method, the application program dataset is configured to access, alter, update, and/or create at least one application dedicated file and/or dedicated file enabling access to the information provided in the security credentials. The application dedicated file and/or dedicated file maybe used according to standardised file structures, such as the ETSI TS 102 221 file structure of UICC application (chapter 8.1, Fig. 8.1). This additionally helps in shielding restricted data structures, in particular elementary files, from unwanted and/or an authorized access, yet, enabling the utilization of information contained therein.

According to an embodiment of the method, the API is configured to allow the application program dataset to steer a selection of at least one application dedicated file and/or dedicated file through the API enabling access to the information provided in the security credentials. The application dedicated file can provide an entry point to an application. The API can provide a pointer to respective information contained in the application dedicated file and/or dedicated file. This can further help in shielding restricted data structures, in particular elementary files, from unwanted and/or an authorized access, yet, enabling the utilization of information contained therein.

According to an embodiment of the method, at least two sets of security credentials are provided. The API can help to select information from the at least two sets of security credentials. Each of the at least two sets of security credentials may be provided for enabling a user to access a particular secured service, such as different mobile telecommunication networks, or alike. This further helps in providing a way to securely handle security credentials for user devices involving their secure elements, such that on the one hand, convenient operation and availability, as well as on the other hand, functional safety, and multiple secured services, such as different network attachments can be assured or at least improved in a satisfactory manner.

According to an embodiment of the method, the security credentials are provided by at least two different trusted entities. For example, the different trusted entities may each act as credential providers may provide two different sets of security credentials. The API can call the different sets of security credentials for different credential providers which may all be using the same application program dataset. This can additionally help in providing a way to securely handle security credentials for user devices involving their secure elements, such that on the one hand, convenient operation and availability, as well as on the other hand, functional safety, and multiple secured services, such as different network attachments can be assured or at least improved in a satisfactory manner.

According to an embodiment of the method, the at least one user profile dataset for a user is being accessed, altered, updated, and/or created at least in part based on the security credentials. The user profile dataset can include at least a part of the security credentials. Therefore, the at least one user profile dataset can comprise respective diversified data configured for accessing the at least one mobile telecommunication network the at least one user profile dataset can include security credentials configured for accessing at least one mobile telecommunication network and the at least one further mobile telecommunication network. The security credentials may be administered by the server device and/or trusted entity.

The security credentials may be configured such that outside of a manufacturing environment and/or in a post-issuance state they can be accessed via the application program dataset. The security credentials can be provided as a set of security credentials based on respective requirements of the secured services, such as mobile telecommunication networks to be accessed. This further helps in providing way to handle different network attachments of user devices involving their secure elements, such that on the one hand, convenient operation and availability, as well as on the other hand, functional safety, and security of can be assured or at least improved in a satisfactory manner.

The security credentials and/or user profile dataset may comprise respective diversified data configured for accessing at least one secured service, such as a mobile telecommunication network. The diversified data may comprise at least one profile identifier, subscription identifier, authentication certificate, cryptographic parameter, and/or security key configured for accessing the secured service. Furthermore, the diversified data may comprise the security credentials and/or may underlie the security credentials. This can further help in providing way to handle different security credentials of user devices involving their secure elements, such that on the one hand, convenient operation and availability, as well as on the other hand, functional safety, and security of can be assured or at least improved in a satisfactory manner.

### Brief Description of the Drawings

- Fig. 1: is a schematic exemplary illustration of a communication system configured for carrying out a method according to the present invention.
- Fig. 2: is a schematic exemplary illustration of a filesystem that can be used for managing data objects involved in carrying out a corresponding method.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

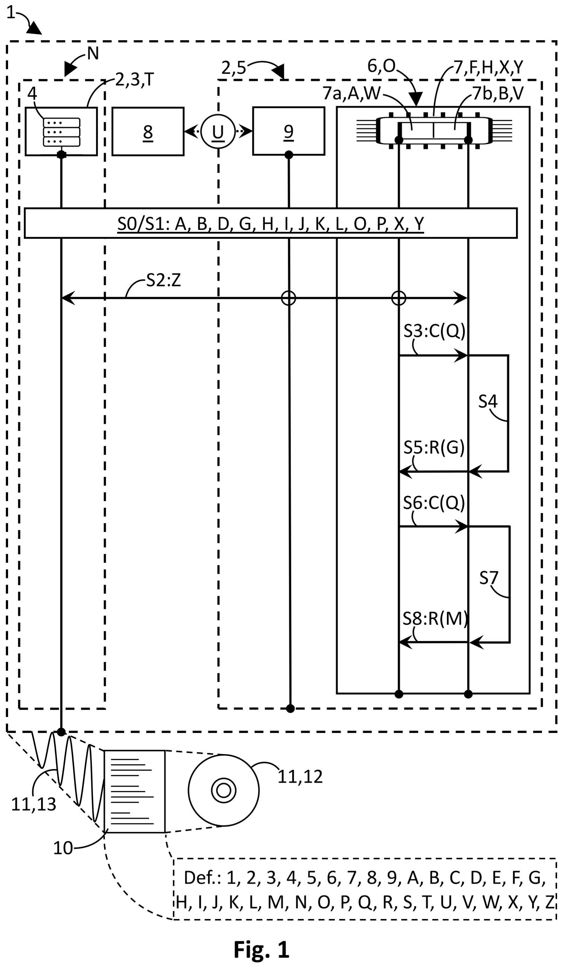

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program dataset A, operating system datasets O and/or user profiles P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

In the present example, the user devices 5 may be adapted for secure operation, transactions and/or communication, e.g., accessing a secure service, such as a mobile telecommunication network N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a and at least one second memory region 7b.

At least one user profile dataset P stored in the secure element 6 can be associated to a respective user U and can therefore be configured according to respective diversified data L and/or to access at least one data object D. The at least one user profile P, diversified data L, and/or data object D can have a predefined data format as required for accessing the mobile telecommunication networks N, and can be stored in respective memory regions 7a, 7b of the secure storage location 7. By accessing the telecommunication network N, the user may be provided with respective network services and access to data objects D. For example, the mobile telecommunication network N may be a public network (PN), a non-public network (NPN), such as a private network provided by a certain government, or non-government institution, e.g., schools, colleges, government agencies, departments, universities, or alike, and/ by or private companies, such as service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

The operating system dataset O may comprise and/or may be configured to interact with an application program dataset A, the at least one user profile P and/or security credentials H, including profile identifiers I, authentication certificates J, security keys K, including network authentication keys (NAA), and/or or cryptographic parameters M, such as Milenage Constants, TUAK Algo-Code, etc. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the security credentials H, the diversified data L, the at least one user profile P, the operating system dataset O, the profile identifiers I, and/or the authentication certificates J and/or any component thereof. The authentication certificates J may be any kind of electronic certificate, for example, that can be issued by the trusted entity T, for authenticating an origin of the user devices 5, the secure elements 6, the secure storage location 7, the application program dataset A, the security credentials H, the diversified data L, the operating system dataset O, the at least one user profile P, the profile identifiers I, and/or any component thereof.

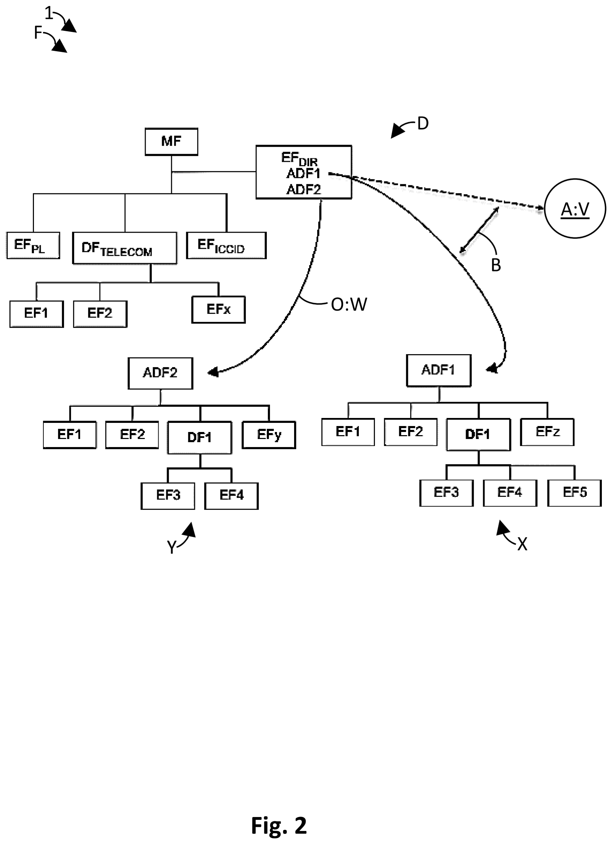

The application program dataset A is configured to communicate with an application programming interface (API) B, for example, by means of command messages C. In the present example, the application program dataset A and the API B are provided on the secure element 6. The application program dataset A can send a call Q or query to the API B for retrieving, accessing and/or altering information in the security credentials H, for example, in the form of a credential value G. The credential value G can underlie or at least be a part of the security credentials H which may be provided as different sets X, Y of security credentials H arranged in a respective file system F (see Fig. 2)

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the security system 1, any of the components thereof and/or any steps S carried out thereby, can be defined in and/or by the configuration program 10.

For carrying out the steps S, the configuration program 10 may provide and/or define respective command messages C, which can be configured to interact with the user devices 5, the secure elements 6, the secure storage location 7, the application program dataset A, the API B, the security credentials H, the diversified data L, the operating system dataset O, the at least one user profile P, the profile identifiers I, the mobile telecommunication network N and/or any component thereof. Transmission lines (not shown) may be provided for handling and/or transferring any of the above data components and/or data objects D, for example, via the mobile telecommunication network N, parts thereof and/or elements connected thereto. The mobile telecommunication network N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components.

In a first step S1, the server device 3 may provide any of the data components of the configuration system 1, including the operating system dataset O, possibly along with the application program dataset A, API B, credential values G, security credentials H, diversified data L and/or at least one user profile P associated with the user U, to the secure element 6 of the user device 5, for example through the communication interface 9 to be stored in the secure storage location 7 for deployment to the user U. The at least one user profile P may be created based upon the diversified data L. In particular, certain security credentials H may have a high or even the highest security level conceivable for the secure element 6. Therefore, such security credentials H can be provided on a proprietary file format defined by a respective trusted entity T providing the security credentials H. Any of the mentioned data components may be provided as an/or enable access data objects D, such as electronic load files (ELF), data blobs, or alike.

In the present example, the data provision and step S1 can be associated with a pre-issuance condition of the user device 5 and/or the secure element 6. Any of the steps taking place after the activation process in a step S2 can be associated with a post-issuance condition of the user device 5 and/or the secure element 6, for example, involving a respective registration confirmation Z. Providing operating system dataset O, possibly along with the application program dataset A, API B, credential values G, security credentials H, diversified data L and/or at least one user profile P to the user device 5 and/or the secure element 6 can therefore be regarded as a zeroth step S0 which may take place in a factory and/or manufacturing facility before the first step S1 of providing data to the user device 5 and/or the secure element 6.

In a third step S3, the communication interface 9, for example, of a modem or network terminal (not shown) of the user device 5, may demand a certain operation involving a security credential H. The application program dataset A, for example, provided in the form of an applet running as a part of an/or along with the operating system O providing an operating instance W in the first memory region 7a of the secure storage location 7, can send a command message C with a respective call Q or query to the API B, which may provide a virtual instance V or applet instance that can be provided and the second memory region 7b of the secure storage location 7. For example, in order to select a certain application dedicated file ADF (see Fig. 2), the command message C with its respective call Q (in parenthesis) may take the following form:

### switchADF_USIM_AID(boolean ulbInstance)

In a fourth step S4, based on whether the virtual instance V is available, it can be selected. In the present example, if the call Q *ulbInstance = true,* when terminal selects ADFUSIM, the virtual instance V, such as an ULB applet instance, will be selected. If the call Q *ulbInstance = false,* when the terminal selects ADFUSIM, the "real" ADFUSIM will be selected. In a fifth step S5, the API B can return respective response R, possibly containing the respect received credential value G, to the application program dataset A to be further processed, for example, being forwarded via the remote management application 8 asset or communication interface 9.

Using command messages C, for example in the form of the commands as described above with the help of the application program dataset A that can query the API B, can help to determine whether a specific security credential H is available and based in the results take the decision to perform a respective action. As another example, in a sixth step S6, the application program dataset A can send a further command message C with respective call Q or query to the API B. For example, in order to retrieve a specific credential value G from the security credentials H, such as a cryptographic parameter M, e.g., Milenage Constants, the command message C with its respective call Q (in parenthesis) may take the following form: *setMilenageCredentials*(*byte[]Ki,short KiOffset,byte[]OPc, short OPcOffset,short refMilenageConstants)*

In a seventh step S7, according to the present example, set Ki, OPc can be stored in secure nonvolatile (NV) memory and *refMilenageConstants* to identify cryptographic parameters M in the form of Milenage Constants for authentication. In an eights step S8, a respective response R, for example, containing the cryptographic parameter M, can be returned from the API B to the application program dataset A. In the present example, the application program dataset A, for instance a ULB applet, can set the refMilenageConstants value to 0 by default. If the application program dataset A finds a match of the Temp-IMSI in the (ULB proprietary) EF_IMSI_MATCHING_TABLE, it can use the AuthConst Id (of the matching entry) as the value for this parameter. Instead of a short value for the refMilenageConstants, also a byte value could be used (if we restrict the allowed AuthConst ID range, e.g. 0x0001 < AuthConst ID < 0x007F).

Fig. 2 shows a schematic exemplary illustration of a filesystem F that can be used for managing data objects D, for example, in the form of application dedicated files, dedicated files DF, elementary files EF, and/or master files MF as defined by of ETSI TS 102 221 which may be involved in carrying out a corresponding method. According to the present example, the secure element 6, such as an UICC may have two USIM ADFs, namely ADF1 and ADF2, along with a respective directory file EF_DIR. The application program dataset A, for example, again a ULB applet, can be enabled to replace ADFUSIM AID in EFDIR with its own instance AID in order to be selected by the terminal instead of the "real" ADFUSIM. In the same or at least similar way, the application program dataset A can be enabled to restore the real ADFUSIM AID in the directory file EF_DIR.

According to the present example, the application program dataset a can update a proprietary EFDIR (under the proprietary file ID - FID). The proprietary EFDIR can have the same FID as the standard file directory EFDIR (under the master file MF) and both files are linked to each other. The API B can allow the application program dataset A to steer the selection of ADFUSIM by with the same effect as when selecting proprietary files, but in a different way, e.g. by using a command message C in the following form with a respective call Q query similarly to already mentioned above:
*ULB_API.switchADF_USIM_AID*(*boolean ulblnstance*)
*ulbInstance = true:* when terminal selects ADFUSIM, the ULB applet instance will be selected
*ulbInstance = false:* when terminal selects ADFUSIM, the "real" ADFUSIM will be selected

In contrast to the proprietary solution, the second solution involving to call the API B may require respective adaptation of the code underlying the application program dataset. In the example shown in Fig. 2 based on the ETSI TS 102 221, the application program dataset A influences the selection of ADFUSIM by means of the API B. Therefore, the application program dataset A can be enabled to update certain data objects D, such as an elementary file EF containing a profile identifier I, for example, an International Mobile Subscriber Identity (IMSI) which can be stored in the respective identity elementary file EF_IMSI.

According to the present example, the application program dataset A can update any proprietary EF_IMSI (under the respective proprietary FID). The proprietary EF_IMSI can have the same FID as the standard EF_IMSI (under ADFUSIM) and both files are linked to each other. The application program dataset A can be enabled to set Ki, OPc and the Milenage Constants to be used for the network authentication. This can be achieved by the API B, e.g., with the following command messages C and respective calls Q or queries: 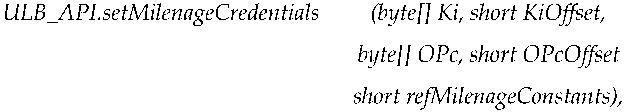 wherein
Ki: byte array containing the (16 byte long) Ki; KiOffset: offset in Ki, where Ki is stored;
OPc: byte array containing the (16 byte long) OPc;
OPcOffset: offset in OPc, where OPc is stored;
refMilenageConstants: reference to standard/ default or IMSI specific Milenage Constants;
refMilenageConstants = 0: default/ standard Milenage Constants;
refMilenageConstants > 0: (Temp-)IMSI specific Milenage Constants.

For example, as a response R to the command message C *"setMilenageCredentials"* the API B can return 0x00 upon success and 0XFF - as generic Error. More Error codes can be provided in future to address specific error handling by the application program dataset A. The application program dataset A can set a respective cresdential value G, for example the cryptographic parameter M, such as the refMilenageConstants value, to 0 by default. If the application program dataset A finds a match of the Temp-IMSI in the respective matching table (not shown), such as the (ULB proprietary) EF_IMSI_MATCHING_TABLE, the application program dataset A can use the AuthConst Id (of the matching entry) as the value for this parameter. Instead of a short value for the refMilenageConstants, also a byte value could be used (for example, involving a restriction the allowed AuthConst Id range, e.g. 0x0001 < AuthConst Id < 0x007F).

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: communication system
- 2: computing device
- 3: server device
- 4: hardware security module
- 5: user device
- 6: secure element
- 7: secure storage location
- 7a: first memory region
- 7b: second memory region
- 8: remote management application
- 9: communication interface / modem
- 10: configuration program
- 11: computer-readable data carrier
- 12: computer-readable medium
- 13: data carrier signal

- A: application program dataset
- ADF: application dedicated file
- B: application programming interface
- C: command message
- D: data object
- DF: dedicated file
- EF: elementary file
- F: file system
- G: credential value
- H: security credentials
- I: profile identifier
- J: authentication certificate
- K: security key
- L: diversified data
- M: cryptographic parameter
- MF: master file
- N: mobile telecommunication network
- O: operating system dataset
- P: user profile
- Q: call/query
- R: response
- S: step
- T: trusted entity
- U: user
- V: virtual instance / applet instance
- W: operating instance
- X: set of credentials
- Y: further set of credentials
- Z: registration confirmation

- S0: initialisation
- S1: provide data
- S2: activate device/profile
- S3: send command message
- S4: select/retrieve
- S5: provide response
- S6: send further command message
- S7: select/retrieve
- S8: provide further response

## Claims

1. Method of configuring a user device (5) to enable a user (U) to access to a secured service, in particular for communication via at least one mobile telecommunication network (N), the method comprising the steps of
providing security credentials (H), for example, by a trusted entity (T), adapted to allow a secure element (6), such as an eUICC, of the user device (5), to enable access to a secured service, for example, the at least one mobile telecommunication network (N);
storing the security credentials (H) in the secure element (6); and
providing an application program dataset (A) configured to at least partly access and/or alter information provided in the security credentials (H) via an application programming interface, API, (B).

2. Method according to claim 1, wherein the application program dataset (A) is configured to call the API (B).

3. Method according to claim 1 or 2, wherein the application program dataset (A) and/or the API (B) are configured to be controlled by command messages (C).

4. Method according to at least one of claims 1 to 3, wherein the security credentials (H) are embedded in data objects (D) and the API (B) is configured to access the data objects (D).

5. Method according to at least one of claims 1 to 4, wherein the security credentials (H) are at least in part provided in the form of at least one elementary file (EF) and/or within a secure storage location (7) within the secure element (6), and wherein the API (B) is configured to create, alter, update and/or access the elementary file (EF), and/or the secure storage location (7), respectively, in particular used to store the security credentials (H), such as security keys (K).

6. The method according to at least one of claims 1 to 5, wherein the application program dataset (A) is configured to access, alter, update, and/or create at least one application dedicated file (ADF) and/or dedicated file (DF) enabling access to the information provided in the security credentials (H).

7. Method according to claim at least one of claims 1 to 6, wherein the API (B) is configured to allow the application program dataset (A) to steer a selection of at least one application dedicated file (ADF) and/or dedicated file (DF) through the API (B) enabling access to the information provided in the security credentials (H).

8. Method according to at least one of claims 1 to 7, wherein at least two sets of security credentials (H) are provided.

9. Method according to at least one of claim 1 to 8, wherein the security credentials are provided by at least two different trusted entities (T).

10. Method according to at least one of claim 1 to 9, wherein at least one user profile dataset (P) for a user (U) is being accessed, altered, updated, and/or created at least in part based on the security credentials (H).

11. Configuration program (10) for configuring a user device (5) to enable a user (U) to access to a secured service, in particular for communication via mobile telecommunication networks, wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Application program dataset (A) for operating a secure element (6) of a user device (5), such as an eUICC, wherein the application program dataset (A) is configured to carry out a method according to at least one of claims 1 to 10 and/or configured with a configuration program (10) according to claim 11.

13. Computer-readable data carrier (11, 12, 13) having stored thereon a configuration program (10) according to claim 11 and/or an application program dataset (A) according to claim 12.

14. User device (5), in particular a mobile device or an IoT device to be configured to enable a user to access to a secured service, such as for communication via a mobile telecommunication network (N), wherein the user device (5) is configured to carry out a method according to at least one of claims 1 to 10, comprises a configuration program (10) according to claim 11, an application program dataset (a) according to claim 12 and/or a computer-readable data carrier (11, 12, 13) according to claim 13.

15. Server device (3), in particular a security server providing a secure location for handling security credentials (H), in particular user profiles (P), to enable access to a secured service, such as for communication via mobile telecommunication networks, wherein the server device (4) is configured to carry out a method according to at least one of claims 1 to 10, comprises a configuration program (10) according to claim 11, an application program dataset (A) according to claim 12 and/or a computer-readable data carrier (11, 12, 13) according to claim 13.
